# EUROPEAN PATENT APPLICATION

(11) **EP 4 734 217 A1**
(43) Date of publication of application: **29.04.2026**
(21) Application number: 24846009.9
(22) Date of filing: 23.07.2024
(51) Int. Cl.: H01M 10/058, H01M 10/0565, H01M 10/0568, H01M 10/0569, H01M 10/04, H01M 10/44, H01M 50/105

(54) **POUCH-TYPE SECONDARY BATTERY, OPERATING METHOD THEREOF, AND MANUFACTURING METHOD THEREOF**

(30) Priority: 26.07.2023 KR 20230097206
(71) Applicant: SK On Co., Ltd., Seoul 03161 (KR)
(72) Inventor: PARK, Doe-Hee, Daejeon 34124 (KR); KIM, Byung-Hyuk, Daejeon 34124 (KR); RYU, Hye-Min, Daejeon 34124 (KR); SHIN, Hyun-Seop, Daejeon 34124 (KR)
(74) Representative: Prüfer & Partner mbB Patentanwälte · Rechtsanwälte
(86) International application number: PCT/KR2024/010624
(87) International publication number: WO 2025/023707

(57) **Abstract**

A method for manufacturing a pouch-type secondary battery according to one embodiment comprises the steps of: accommodating an electrode assembly including a positive electrode and a lithium metal negative electrode in an inner space of a pouch-type case; injecting a composition for a polymer electrolyte into the pouch-type case; curing the composition for a polymer electrolyte; and degassing, wherein the curing step may involve curing the polymer electrolyte without pressurizing the pouch-type case.

## Description

### Technical Field

The present disclosure relates to a pouch-type secondary battery, an operating method thereof, and a manufacturing method thereof.

### Background Art

A lithium secondary battery, which has high energy density and is easy to carry, is mainly used as a driving power supply for mobile information terminals such as a mobile phone, a laptop computer, and a smartphone. In addition, recently, research on using a lithium secondary battery as a driving power supply or a power storage power supply for a hybrid vehicle or an electric vehicle by using high energy density characteristics has been actively conducted. When the secondary battery is used in such medium or large-sized devices, a large number of secondary batteries are electrically connected to increase capacity and output.

Thereamong, since the lithium polymer battery uses a solid polymer electrolyte as the electrolyte, the lithium polymer battery exhibits improved safety and enhanced flexibility at the same time.

Among these lithium polymer batteries, the development of lithium metal batteries using lithium metal is the focus of attention. The lithium metal batteries utilize a negative electrode active material formed of a lithium metal (Li-metal) or lithium alloy (Li-alloy) material, and theoretically possess the advantage of very high energy capacity.

In this case, during the manufacturing process of the lithium polymer battery, a problem called "squeeze-out" may occur, in which the electrolyte leaks out of the pouch-type case and is cured, thereby failing to return to its original position during charging. The squeezed-out battery may exhibit reduced cycle characteristics and efficiency due to increased electrolyte solution resistance Rs caused by a lack of electrolyte within an electrode assembly.

### Disclosure of Invention

### Technical Problem

An aspect of the present disclosure is to provide an operating method of a pouch-type secondary battery with excellent cycle characteristics and efficiency by applying pressure during charging/discharging.

Another aspect of the present disclosure is to provide a pouch-type secondary battery capable of suppressing an interfacial delamination phenomenon caused by dendrite formation in a battery, and a manufacturing method thereof.

### Solution to Problem

According to an aspect of the present disclosure, a manufacturing method of a pouch-type secondary battery includes: accommodating an electrode assembly including a positive electrode and a lithium metal negative electrode in a pouch-type case; injecting a composition for a polymer electrolyte into the pouch-type case; and curing the composition for the polymer electrolyte without pressurizing the pouch-type case.

The manufacturing method may further include degassing after the curing.

The composition for the polymer electrolyte may include a lithium salt, a polymerizable monomer, and a polymerization initiator.

The lithium salt may include at least one anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻*,* CF₃CO₂⁻, CH₃CO₂⁻, SCN⁻, and (CF₃CF₂SO₂)₂N⁻.

The composition for the polymer electrolyte may further include an organic solvent.

The organic solvent may be a linear carbonate-based solvent, a cyclic carbonate-based solvent, or a mixed solvent thereof.

The linear carbonate-based solvent may be at least one selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC), and the cyclic carbonate-based solvent may be at least one selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), and fluoroethylene carbonate (FEC).

The polymerizable monomer may include at least one selected from the group consisting of tetraethylene glycol diacrylate, polyethylene glycol diacrylate, 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

According to another aspect of the present disclosure, a pouch-type secondary battery includes: an electrode assembly including a positive electrode and a lithium metal negative electrode; a polymer electrolyte; a pouch-type case accommodating the electrode assembly and the polymer electrolyte; and a pressurizing unit pressurizing the pouch-type case.

The polymer electrolyte may include a lithium salt.

The lithium salt may include at least one anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻*,* CF₃CO₂⁻, CH₃CO₂⁻, SCN⁻, and (CF₃CF₂SO₂)₂N⁻.

The polymer electrolyte may include an organic solvent.

The organic solvent may be a linear carbonate-based solvent, a cyclic carbonate-based solvent, or a mixed solvent thereof.

The linear carbonate-based solvent may be at least one selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC), and the cyclic carbonate-based solvent may be at least one selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), and fluoroethylene carbonate (FEC).

The polymer electrolyte may include a structural unit derived from at least one selected from the group consisting of tetraethylene glycol diacrylate, polyethylene glycol diacrylate, 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

Pressure applied by the pressurizing unit may be 0.5 to 15 MPa.

The pouch-type secondary battery may further include a buffer pad between the pouch-type case and the pressurizing unit.

The pouch-type secondary battery may further include a separator interposed between the positive electrode and the lithium metal negative electrode.

According to still another aspect of the present disclosure, there is provided a pouch-type secondary battery, in which the pouch-type secondary battery manufactured by the above-described method includes a pressurizing unit pressurizing the pouch-type case.

According to yet another aspect of the present disclosure, there is provided an operating method of a pouch-type secondary battery, in which the pouch-type secondary battery manufactured by the above-described method is charged and discharged by being pressurized at a pressure of 0.5 to 15 MPa.

### Advantageous Effects of Invention

According to an aspect of the present disclosure, it is possible to provide an operating method of a pouch-type secondary battery with excellent cycle characteristics and efficiency by pressurizing the pouch-type secondary battery during charging/discharging.

According to another aspect of the present disclosure, it is possible to provide a pouch-type secondary battery capable of suppressing an interfacial delamination phenomenon caused by dendrite formation in the electrode and the electrolyte, and a manufacturing method thereof.

### Brief Description of Drawings

FIG. 1 is a photograph comparing the presence or absence of squeeze-out of a polymer electrolyte depending on the presence or absence of pressurization during thermal curing in a manufacturing method of a pouch-type secondary battery according to an implementation example.
FIG. 2 is a photograph comparing the degree at which the polymer electrolyte is electrodeposited on a lithium metal negative electrode depending on the presence or absence of pressurization in the pouch-type case during charging/discharging.
FIG. 3 is a graph showing capacity retentions of Example 1 and Comparative Examples 1 to 3.
FIG. 4 is a graph showing coulomb efficiency of Example 1 and Comparative Examples 1 to 3.
FIG. 5 is a graph showing the capacity retentions of Examples 1 to 3 and Comparative Example 3.
FIG. 6 is a graph showing the coulomb efficiency of Examples 1 to 3 and Comparative Example 3.
FIG. 7 is a graph showing EIS analysis results and an enlarged view of the results of Examples 1 to 3 and Comparative Example 3.

### Best Mode for the Invention

Hereinafter, the present disclosure will be described in detail with reference to the accompanying drawings. However, this is merely exemplary, and the present disclosure is not limited to the specific embodiments described by way of example.

### Manufacturing method of pouch-type secondary battery

A manufacturing method of a pouch-type secondary battery according to an implementation example includes: accommodating an electrode assembly including a positive electrode and a lithium metal negative electrode in an inner space of a pouch-type case; injecting a composition for a polymer electrolyte into the pouch-type case; and curing the composition for the polymer electrolyte, wherein the curing step may involve curing the polymer electrolyte without pressurizing the pouch-type case.

Additionally, the manufacturing method may further include degassing after the curing.

According to an implementation example, the manufacturing method includes accommodating the electrode assembly in the pouch-type case, in which the electrode assembly may be manufactured according to the conventional method known in the art.

The electrode assembly may be manufactured by sequentially stacking a positive electrode and a lithium metal negative electrode, and then being accommodated in the pouch-type case.

The positive electrode may include a positive electrode current collector and a positive electrode composite layer disposed on at least one surface of the positive electrode current collector.

The positive electrode current collector may include stainless steel, nickel, aluminum, titanium, or an alloy thereof. The positive electrode current collector may also include the aluminum or stainless steel surface-treated with carbon, nickel, titanium, or silver. The positive electrode current collector may be, for example, 10 to 50 µm, but is not limited thereto.

The positive electrode composite layer may include a positive electrode active material. The positive electrode active material may include a compound capable of reversibly intercalating and deintercalating lithium ions.

According to exemplary embodiments, the positive electrode active material may include a lithium-nickel metal oxide. The lithium-nickel metal oxide may further include at least one of cobalt (Co), manganese (Mn), and aluminum (Al).

In some embodiments, the positive electrode active material or the lithium-nickel metal oxide may include a layered structure or a crystal structure represented by the following Chemical Formula 1:

[Chemical Formula 1] LiₓNiₐM_{b}O_{2+z}

In Chemical Formula 1, 0.9≤x≤1.2, 0.6≤a≤0.99, 0.01≤b≤0.4, and -0.5≤z≤0.1. As described above, M may include Co, Mn, and/or Al.

The chemical structure represented by Chemical Formula 1 represents the bonding relationships within the layered structure or crystal structure of the positive electrode active material and does not exclude other additional elements. For example, M may include Co and/or Mn, and Co and/or Mn may serve as main active elements of the positive electrode active material, together with Ni. Chemical Formula 1 is provided to express the bonding relationships of the main active elements and should be understood as encompassing the introduction and substitution of additional elements.

In one embodiment, auxiliary elements may be further included to enhance the chemical stability of the positive electrode active material or the layered/crystal structure by being added to the main active element. The auxiliary elements may be incorporated into the layered structure/crystal structure to form bonds. Even in this case, and should be understood as being included within the chemical structure range represented by Chemical Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, or Zr. The auxiliary element may, for example, act as the auxiliary active element that contributes to the capacity/output activity of the positive electrode active material together with Co or Mn, such as Al.

For example, the positive electrode active material or the lithium-nickel metal oxide may include the layered structure or the crystal structure represented by the following Chemical Formula 1-1:

[Chemical Formula 1-1] LiₓNiₐM1_{b1}M2_{b2}O_{2+z}

In Chemical Formula 1, M1 may include Co, Mn, and/or Al. M2 may include the above-described auxiliary elements. In Chemical Formula 1-1, 0.9≤x≤1.2, 0.6≤a≤0.99, 0.01≤b1+b2≤0.4, and -0.5≤z≤0.1 may be satisfied.

The positive electrode active material may further include a coating element or a doping element. For example, elements substantially identical to or similar to the above-described auxiliary elements may be used as the coating element or the doping element. For example, the above-described elements may be used as the coating element or the doping element alone or in combination of two or more.

The coating element or the doping element may be present on a surface of a lithium-nickel metal oxide particle or may penetrate through a surface of a lithium-nickel metal composite oxide particle, so the coating element or the doping element may be included in the bonding structure represented by the above Chemical Formula 1 or Chemical Formula 1-1.

The positive electrode active material may include a nickel-cobalt-manganese (NCM)-based lithium oxide. In this case, an NCM-based lithium oxide with increased nickel content may be used.

Ni may be provided as a transition metal associated with the output and capacity of lithium secondary batteries. Therefore, by employing a high-Ni composition in the positive electrode active material as described above, a high-capacity positive electrode and a high-capacity lithium secondary battery may be provided.

However, as the Ni content increases, the long-term storage stability and lifespan stability of the positive electrode or secondary battery may be relatively reduced, and side reactions with the electrolyte may also increase. However, according to exemplary embodiments, Co may be included to maintain electrical conductivity, while Mn may be included to improve lifespan stability and capacity retention characteristics.

The Ni content (e.g., the mole fraction of nickel among the total moles of nickel, cobalt, and manganese) in the NCM-based lithium oxide may be 0.6 or greater, 0.7 or greater, or 0.8 or greater. In some embodiments, the Ni content may be 0.8 to 0.95, 0.82 to 0.95, 0.83 to 0.95, 0.84 to 0.95, 0.85 to 0.95, or 0.88 to 0.95. In some embodiments, the positive electrode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the positive electrode active material may include, for example, a Mn-rich active material, a Li-rich layered oxide (LLO)/over-lithiated oxide (OLO) active material, or a Co-less-based active material having the chemical structure or the crystal structure represented by Chemical Formula 2.

[Chemical Formula 2] p[Li₂MnO₃] · (1-p)[Li_{q}JO₂]

In Chemical Formula 2, 0<p<1, 0.9≤q≤1.2, and J may include at least one element selected from the group consisting of Mn, Ni, Co, Fe, Cr, V, Cu, Zn, Ti, Al, Mg, and B.

The lithium metal negative electrode may include a lithium metal layer and a lithium metal protective layer. The lithium metal protective layer may be formed on at least one surface of the lithium metal layer.

The lithium metal layer may include lithium metal or an alloy thereof, and may be a metal layer substantially composed solely of lithium metal. The thickness of the lithium metal layer is not particularly limited and may range, for example, from 1 to 200 µm.

The lithium metal protective layer is formed on at least one surface of the lithium metal layer to induce uniform lithium electrodeposition behavior, thereby effectively suppressing the growth of lithium dendrites.

The lithium metal protective layer may include lithio-philic inorganic particles capable of suppressing the dendrite growth on the lithium metal layer. The lithio-philic inorganic particles refer to particles including a lithio-philic inorganic material, such as silver (Ag), gold (Au), zinc (Zn), or magnesium (Mg), and may be substantially composed solely of lithio-philic inorganic materials. These lithio-philic inorganic materials electrochemically react with lithium and may induce uniform lithium ion electrodeposition behavior. Accordingly, when the lithium metal protective layer including the lithio-philic inorganic particles is formed on at least one surface of the lithium metal layer, the growth of lithium dendrites during the battery charging/discharging process may be suppressed, thereby effectively preventing problems such as the decrease in irreversible capacity and the internal battery short circuits.

A separator may be interposed between the positive electrode and the negative electrode. The separator may be configured to prevent electrical short circuits between the positive electrode and the negative electrode and to generate ion flow. According to one embodiment, the thickness of the separator may be 10 µm to 20 µm, but the present disclosure is not limited thereto.

For example, the separator may include a porous polymer film or a porous non-woven fabric. The porous polymer film may include a polyolefin-based polymer, such as an ethylene polymer, a propylene polymer, an ethylene/butene copolymer, an ethylene/hexene copolymer, or an ethylene/methacrylate copolymer. The porous nonwoven fabric may include high-melting-point glass fibers, polyethylene terephthalate fibers, or the like. The separator may include a ceramic-based material. For example, the inorganic particles may be coated on or dispersed within the polymer film to improve heat resistance.

The separator may have a monolayer or multilayer structure including the polymer film and/or the non-woven fabric described above.

In an implementation example, a manufacturing method for a pouch-type secondary battery may include injecting a composition for a polymer electrolyte into the pouch-type case in which the electrode assembly is accommodated.

Since the polymer electrolyte has superior electrochemical stability compared to liquid electrolytes, it is possible to maintain a constant thickness of the secondary battery and to manufacture a lithium secondary battery with improved stability by preventing leakage of the electrolyte solution.

The composition for the polymer electrolyte may include a lithium salt, a polymerizable monomer, and a polymerization initiator.

The lithium salt may be represented, for example, as Li⁺X⁻, where X⁻ is an anion of the lithium salt. As the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻*,* CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc., may be exemplified.

The lithium salt may be appropriately varied within a commonly usable range to achieve an optimal anti-corrosion film-forming effect on the electrode surface. The lithium salt content in the polymer electrolyte may range from 0.01 to 5 mol%. Below the above-described range, low ionic conductivity may be a disadvantage. Above the above-described range, viscosity may increase, reducing the impregnation properties of the composition for the polymer electrolyte.

The polymerizable monomer has at least one polymerizable functional group selected from the group consisting of vinyl, epoxy, allyl, and (meth)acrylic groups capable of undergoing polymerization within its structure. The polymerizable monomer is a compound that may be transformed into a gel state through polymerization or crosslinking, and is not particularly limited as long as it is a synthetic monomer, oligomer, or copolymer conventionally used for the preparation of polymer electrolytes.

The polymerizable monomer includes, but is not limited thereto, at least one selected from the group consisting of tetraethylene glycol diacrylate, polyethylene glycol diacrylate (molecular weight of 50 to 20,000), 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, etc., and these compounds may be used alone or in combination of two or more.

As the polymerization initiator, the conventional thermal or photopolymerization initiator known in the art may be used. For example, the polymerization initiator may be thermally decomposed to form radicals, which may then react with polymerizable monomers via free radical polymerization to form the polymer electrolyte.

The polymerization initiator may be, for example, organic peroxides or hydroperoxides such as benzoyl peroxide, acetyl peroxide, dilauryl peroxide, di-tert-butylperoxide, t-butyl peroxy-2-ethyl-hexanoate, cumyl hydroperoxide, and hydrogen peroxide, one or more azo compounds selected from the group consisting of 2,2'-azobis(2-cyanobutane), 2,2'-azobis(methylbutyronitrile), 2,2'-azobis(isobutyronitrile) (AIBN; 2,2'-Azobis(iso-butyronitrile)) and 2,2'-azobisdimethyl-valeronitrile (AMVN), etc., but is not limited thereto.

The composition for the polymer electrolyte may include an organic solvent. The organic solvent is not limited as long as it may minimize decomposition due to oxidation reaction, etc., during the charging/discharging process of the secondary battery and may exhibit the desired properties together with the additive. For example, as the organic solvent, a carbonate-based organic solvent may be used.

The carbonate-based organic solvent may include a linear carbonate-based organic solvent, a cyclic carbonate-based organic solvent, or a mixed solvent thereof.

Specifically, the linear carbonate-based organic solvent is a solvent with low viscosity and low dielectric constant, and may include at least one selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC), and more specifically, may include dimethyl carbonate.

In addition, the cyclic carbonate-based organic solvent may include ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), and fluoroethylene carbonate (FEC).

A manufacturing method of a pouch-type secondary battery according to one implementation example may include a thermal curing step of injecting the composition for the polymer electrolyte in a liquid state into a pouch-type case accommodating an electrode assembly and then applying heat. A manufacturing method of a pouch-type secondary battery according to one implementation example may prevent the squeeze-out phenomenon of the pouch-type secondary battery by manufacturing the pouch-type case without pressurizing the pouch-type case during the thermal curing step.

The thermal curing step may be performed at a temperature and time according to the conventional method known in the art for the secondary battery including the polymer electrolyte. For example, the thermal curing may be performed at a temperature of 70 to 80°C for 1 to 2 hours.

A manufacturing method of a pouch-type secondary battery according to one implementation example may further include a degassing step after curing the composition for the polymer electrolyte. The degassing step may discharge gases generated during the manufacturing process of the pouch-type secondary battery to the outside of the secondary battery.

### Pouch-type secondary battery and operating method thereof

A pouch-type secondary battery according to one implementation example may include an electrode assembly including a positive electrode and a lithium metal negative electrode; a polymer electrolyte; a pouch-type case accommodating the electrode assembly and the polymer electrolyte; and a pressurizing unit for pressurizing the pouch-type case. In addition, the pouch-type secondary battery may further include a separator interposed between the positive electrode and the lithium metal negative electrode. The positive electrode, the lithium metal negative electrode, the pouch-type case, the polymer electrolyte, and the separator may be the same as those described in the manufacturing method of a pouch-type secondary battery described above.

For example, the polymer electrolyte may include a lithium salt and, optionally, an organic solvent, and the lithium salt and the organic solvent may be as described above.

For example, the polymer electrolyte may include a structural unit derived from the above-described polymerizable monomer, and more specifically, may include a structural unit derived from one or more selected from the group consisting of tetraethylene glycol diacrylate, polyethylene glycol diacrylate (molecular weight of 50 to 20,000), 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

In addition, the pouch-type secondary battery may be, for example, a pouch-type secondary battery manufactured according to the manufacturing method of a pouch-type secondary battery described above.

The pressurizing unit may be configured to face one surface and the other surface of the pouch-type case. As long as the pressurizing unit is a device that applies pressure to a pouch-type secondary battery, its shape is not limited. For example, the pressurizing unit may be a pressurizing jig. The pressurizing jig may be configured with a bolt-fastening unit to pressurize the pouch-type secondary battery, but is not particularly limited.

Furthermore, a buffer pad may be further included between the pressurizing unit and the pouch-type case. The buffer pad enables the pressurizing unit to evenly pressurize the surface of the pouch-type case. The material of the buffer pad is not particularly limited, but may be, for example, silicone.

The area of the buffer pad is not particularly limited, but may be, for example, 2 to 4% of surface area of one surface of the pouch-type secondary battery. The pressurizing unit including a buffer pad within the above-described range may evenly pressurize the surface of the pouch-type case.

The thickness of the buffer pad is not particularly limited, but may range from 2 to 3 mm, for example. The pressurizing unit including the buffer pad having the above-described thickness may evenly pressurize the surface of the pouch-type case.

The pressure applied by the above-described pressurizing unit may range from 0.5 to 15 MPa, and specifically from 0.5 to 7 MPa. Pressurizing the pouch-type case within the above range may suppress the delamination phenomenon at the interface between the electrode and the electrolyte, and prevent the increase in an electrolyte solution resistance Rs and a charge transfer resistance Rct caused by electrolyte deficiency, thereby improving the capacity retention and the coulomb efficiency.

An operating method of a pouch-type secondary battery according to one implementation example may involve pressurizing the pouch-type secondary battery described above during the charging and discharging.

The pressure applied during the operation of the pouch-type secondary battery may range from 0.5 to 15 MPa, and specifically from 0.5 to 7 MPa. Pressurizing the pouch-type secondary battery within the above range may suppress the delamination phenomenon at the interface between the electrode and the electrolyte, and prevent the increase in an electrolyte solution resistance Rs and a charge transfer resistance Rct caused by electrolyte deficiency, thereby improving the capacity retention and the coulomb efficiency.

### Mode for the Invention

Hereinafter, embodiments of the present disclosure will be further described with reference to specific experimental examples. Examples and comparative examples included in the experimental examples are merely illustrative of the present disclosure and do not limit the scope of the appended claims. It will be apparent to those skilled in the art that various modifications and variations of the examples are possible within the scope and scope of the present invention, and such modifications and variations are also within the scope of the appended claims.

### Manufacturing Example

A positive electrode slurry was prepared using a weight ratio of 95:2.5:2.5, including LiNi_{0.6}Co_{0.2}Mn_{0.2}O₂ as a positive electrode active material, carbon black as a conductive agent, and polyvinylidene fluoride (PVDF) as a binder. Then, the positive electrode slurry was coated, dried, and pressed onto an aluminum substrate to produce a positive electrode. Lithium metal from Honzo, 100 µm thick, was used as the negative electrode. The positive and negative electrodes were stacked with a polyethylene (PE) separator (7 µm) in between, and then wound to produce an electrode assembly.

The above-described electrode assembly was placed in a pouch-type case, and then a curable polymer electrolyte solution was prepared by mixing a solution containing (LiTFSi 0.8 M and LiDFOB in FEC/EMC (4:6 v/v%) 0.2 M): TMPETA monomer at a weight ratio of 95:5, and further adding t-BPP as an initiator in an amount of 1 wt% based on the weight of the monomer. The curable polymer electrolyte solution was injected into the pouch-type case, which was then sealed and cured in a 70°C oven for 1 hour, thereby manufacturing the lithium secondary battery. In this case, the pouch-type secondary battery was not pressurized during the thermal curing step.

### Comparative Manufacturing Example

The electrode assembly in the above-described Manufacturing Example was placed in a pouch-type case, and then a curable polymer electrolyte solution was prepared by mixing a solution containing (LiTFSi 0.8 M and LiDFOB in FEC/EMC (4:6 v/v%) 0.2 M): TMPETA monomer at a weight ratio of 95:5, and further adding t-BPP as an initiator in an amount of 1 wt% based on the weight of the monomer. The curable polymer electrolyte solution was injected into the pouch-type case, which was then sealed and cured in a 70°C oven for 1 hour, thereby manufacturing the lithium secondary battery. In this case, during the thermal curing step, the pouch-type secondary battery was pressurized to 1.96 MPa.

### Evaluation Example

The pouch-type secondary batteries manufactured in the above Manufacturing Example and Comparative Manufacturing Example were operated under the conditions shown in Table 1 below, and their performance was evaluated.

In this case, the pressurization during charging/discharging means that the pouch-type secondary battery is inserted between the pressurizing jig composed of six bolt-fastening parts and the bolt-fastening parts are tightened to pressurize at a constant pressure, and a silicone pad was used as a buffer pad.

**[Table 1]**

| | Type of pouch-type secondary battery | Pressurizing pressure during charging/discharging (MPa) | Presence or absence of buffer pad |
|---|---|---|---|
| Example 1 | Manufacturing Example | 1.96 | O |
| Example 2 | Manufacturing Example | 0.98 | O |
| Example 3 | Manufacturing Example | 2.45 | O |
| Comparative Example 1 | Manufacturing Example | - | X |
| Comparative Example 2 | Comparative Manufacturing Example | 1.96 | O |
| Comparative Example 3 | Comparative Manufacturing Example | - | X |

### 1. Secondary battery performance evaluation according to absence or presence of pressurization

Using a battery cycler from Wonik PNE Co., the performance of the pouch-type secondary battery operated in Example 1 and Comparative Examples 1 to 3 was evaluated by measuring the cycle retention and coulomb efficiency at 30 cycles.

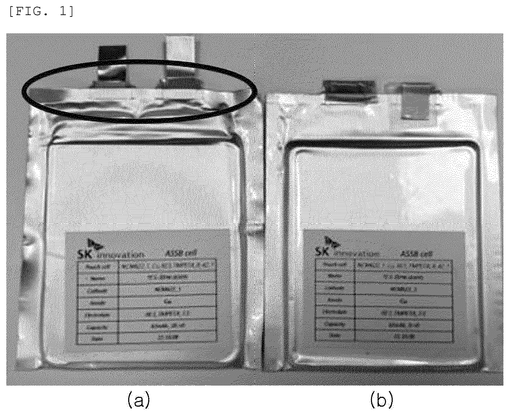

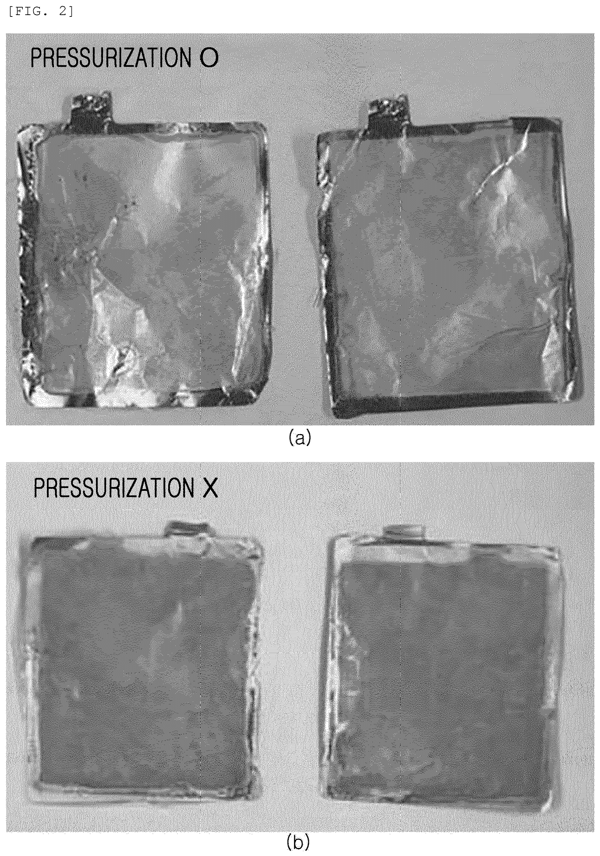

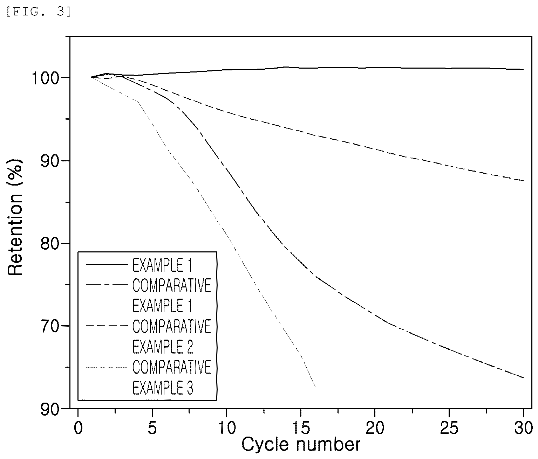

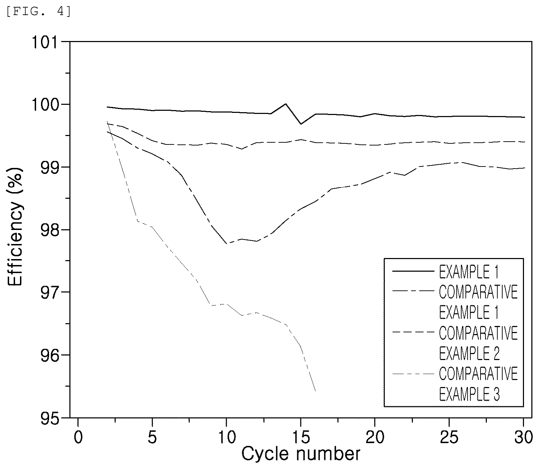

The experimental results are shown in FIGS. 3 and 4 and Table 2. Furthermore, the differences between the Manufacturing Example and Comparative Manufacturing Example were shown in FIG. 1, and the differences between Example 1 and Comparative Example 1 were shown in FIG. 2.

**[Table 2]**

| | Cycle retention (%) at 30 cycles | Average coulomb efficiency (%) over 30 cycles |
|---|---|---|
| Example 1 | 100 | 99.88 |
| Comparative Example 1 | 63 | 98.76 |
| Comparative Example 2 | 85 | 99.43 |
| Comparative Example 3 | 15 | 94.23 |

Referring to FIGS. 3, 4, and Table 2, it may be confirmed that the pouch-type secondary battery of Example 1, which was manufactured using the pouch-type secondary battery manufactured without applying pressure during the electrolyte curing step and operated under pressure during charge and discharge, exhibited higher cycle retention and coulomb efficiency. This may mean that the cycle performance for the pouch-type secondary battery is excellent. However, even though the pouch-type secondary battery of Example 1 was manufactured without pressurizing during the electrolyte curing step, it may be confirmed that the pouch-type secondary battery (Comparative Example 1) that was not pressurized during charge and discharge exhibited inferior cycle performance.

Furthermore, referring to FIG. 2, the secondary battery of Comparative Example 1 exhibited uneven electrodeposition of lithium metal on the copper foil used as a current collector when electrodeposited without pressurizing.

Furthermore, it may be confirmed that the pouch-type secondary battery of the Comparative Manufacturing Example manufactured by pressurizing during the electrolyte curing step exhibits inferior cycle performance even when operated under pressure during charging/discharging. Referring to (a) of FIG. 1, it may be confirmed that the pouch-type secondary battery of the Comparative Manufacturing Example, which was pressurized during the thermal curing, expanded due to the squeeze-out of the electrolyte solution. Referring to (b) of FIG. 1, it may be confirmed that the pouch-type secondary battery of the Manufacturing Example, which was not pressurized during the thermal curing, did not exhibit any expanded portion due to the squeeze-out of the electrolyte solution. Due to the above differences, it may be confirmed that there is the performance difference compared to Example 1 even when operated under pressure during the charging/discharging.

It may be confirmed that the pouch-type secondary battery of the Comparative Manufacturing Example, which was manufactured by pressurizing during the electrolyte curing step, exhibits significantly lower cycle retention, resulting in deteriorated performance compared to the pouch-type secondary battery (Comparative Example 3), which was not pressurized during charging/discharging.

### 2. Secondary battery performance evaluation according to degree of pressurization

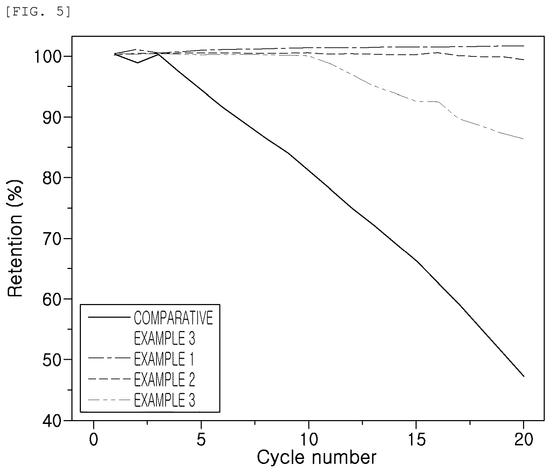

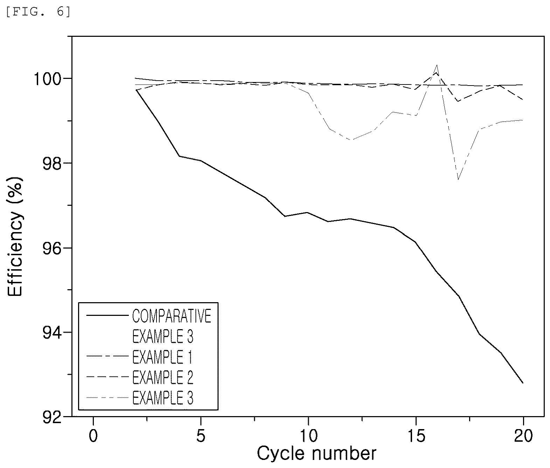

Using a battery cycler from Wonik PNE Co., the pouch-type secondary batteries of Examples 1 to 3 and Comparative Example 3 were evaluated for cycle retention and Coulomb Efficiency based on 20 cycles. The experimental results are presented in FIGS. 5 and 6 and Table 2 below.

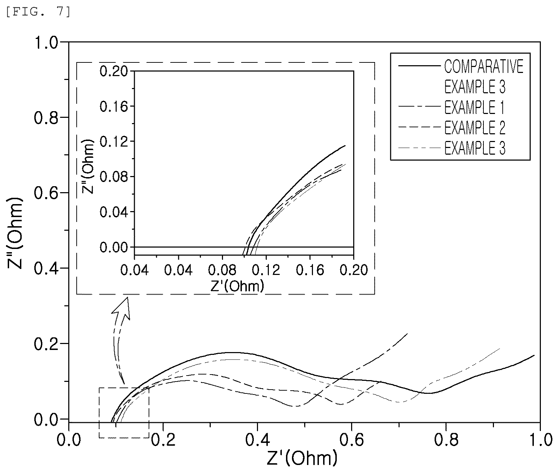

Furthermore, the electrolyte solution resistance Rs and the charge transfer resistance (Rct) of the pouch-type secondary batteries of Examples 1 to 3 and Comparative Example 3 were measured using electrochemical impedance spectroscopy (EIS), which were shown in FIG. 7 and Table 3 below.

**[Table 3]**

| | Cycle retention (%) at 20 cycles | Average coulomb efficiency (%) over 20 cycles | Rs (Ohm) | Rct (Ohm) |
|---|---|---|---|---|
| Example 1 | 100 | 99.88 | 0.108 | 0.518 |
| Example 2 | 99 | 99.82 | 0.091 | 0.618 |
| Example 3 | 86 | 99.36 | 0.113 | 0.783 |
| Comparative Example 3 | 47 | 96.51 | 0.102 | 0.822 |

Referring to FIGS. 5 to 7 and Table 3, it may be confirmed that the pouch-type secondary batteries (Examples 1 to 3) of Manufacturing Example, which were manufactured without applying pressure in the curing step of the electrolyte and operated under pressure during charging and discharging, not only exhibit excellent cycle performance but also show minimal differences in Rs values, indicating that the squeeze-out phenomenon of the electrolyte has been reduced. In this case, it may be confirmed that the secondary battery of Example 1 has the best cycle performance. However, the pouch-type secondary battery, which was manufactured by applying pressure during the electrolyte curing process but operated without applying pressure during charging and discharging, exhibited inferior cycle performance and has the large difference in the Rs (series resistance) value. Therefore, it may be determined that the squeeze-out phenomenon of the electrolyte still occurred.

Contents described above are merely an example of applying the principles of the present disclosure, and other components may be included without departing from the scope of the present disclosure.

## Claims

1. A manufacturing method of a pouch-type secondary battery, comprising:
accommodating an electrode assembly including a positive electrode and a lithium metal negative electrode in a pouch-type case;
injecting a composition for a polymer electrolyte into the pouch-type case; and
curing the composition for the polymer electrolyte without pressurizing the pouch-type case.

2. The manufacturing method of claim 1, further comprising:
degassing after the curing.

3. The manufacturing method of claim 1, wherein the composition for the polymer electrolyte includes a lithium salt, a polymerizable monomer, and a polymerization initiator.

4. The manufacturing method of claim 3, wherein the lithium salt includes at least one anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

5. The manufacturing method of claim 3, wherein the composition for the polymer electrolyte further includes an organic solvent.

6. The manufacturing method of claim 5, wherein the organic solvent is a linear carbonate-based solvent, a cyclic carbonate-based solvent, or a mixed solvent thereof.

7. The manufacturing method of claim 6, wherein the linear carbonate-based solvent is selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC), and the cyclic carbonate-based solvent is at least one selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), and fluoroethylene carbonate (FEC).

8. The manufacturing method of claim 3, wherein the polymerizable monomer includes at least one selected from the group consisting of tetraethylene glycol diacrylate, polyethylene glycol diacrylate, 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

9. A pouch-type secondary battery, comprising:
an electrode assembly including a positive electrode and a lithium metal negative electrode;
a polymer electrolyte;
a pouch-type case accommodating the electrode assembly and the polymer electrolyte; and
a pressurizing unit pressurizing the pouch-type case.

10. The pouch-type secondary battery of claim 9, wherein
the polymer electrolyte includes a lithium salt.

11. The pouch-type secondary battery of claim 10, wherein
the lithium salt includes at least one anion selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

12. The pouch-type secondary battery of claim 9, wherein
the polymer electrolyte includes an organic solvent.

13. The pouch-type secondary battery of claim 12, wherein
the organic solvent is a linear carbonate-based solvent, a cyclic carbonate-based solvent, or a mixed solvent thereof.

14. The pouch-type secondary battery of claim 13, wherein
the linear carbonate-based solvent is at least one selected from the group consisting of dimethyl carbonate (DMC), diethyl carbonate (DEC), dipropyl carbonate (DPC), ethyl propyl carbonate (EPC), ethyl methyl carbonate (EMC), and methyl propyl carbonate (MPC), and
the cyclic carbonate-based solvent is at least one selected from the group consisting of ethylene carbonate (EC), propylene carbonate (PC), 1,2-butylene carbonate (BC), 2,3-butylene carbonate, 1,2-pentylene carbonate, 2,3-pentylene carbonate, vinylene carbonate (VC), and fluoroethylene carbonate (FEC).

15. The pouch-type secondary battery of claim 9, wherein
the polymer electrolyte includes a structural unit derived from at least one selected from the group consisting of tetraethylene glycol diacrylate, polyethylene glycol diacrylate, 1,4-butanediol diacrylate, 1,6-hexanediol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, and glycidyl methacrylate.

16. The pouch-type secondary battery of claim 9, wherein
pressure applied by the pressurizing unit is 0.5 to 15 MPa.

17. The pouch-type secondary battery of claim 9, further comprising:
a buffer pad between the pouch-type case and the pressurizing unit.

18. The pouch-type secondary battery of claim 9, further comprising:
a separator interposed between the positive electrode and the lithium metal negative electrode.

19. A pouch-type secondary battery manufactured by the method of any one of claims 1 to 8, comprising: a pressurizing unit pressurizing the pouch-type case.

20. An operating method of a pouch-type secondary battery, wherein the pouch-type secondary battery manufactured by the method of any one of claims 1 to 8 is charged and discharged by being pressurized at a pressure of 0.5 to 15 MPa.
